(19) Europäisches Patentamt

European Patent Office

Office européen des brevets

(11) **EP 0 941 585 B1**

(12) **EUROPEAN PATENT SPECIFICATION**

(45) Date of publication and mention
of the grant of the patent:
**28.09.2005 Bulletin 2005/39**

(51) Int Cl.7: **H04B 7/02**

(21) Application number: **98922999.2**

(86) International application number:
**PCT/IB1998/000913**

(22) Date of filing: **11.06.1998**

(87) International publication number:
**WO 1999/005798 (04.02.1999 Gazette 1999/05)**

(54) **RADIO COMMUNICATION SYSTEM**

FUNKKOMMUNIKATIONSSYSTEM

SYSTEME DE RADIOCOMMUNICATIONS

(84) Designated Contracting States:
**CH DE FR GB IT LI**

(30) Priority: **23.07.1997 GB 9715396**

(43) Date of publication of application:
**15.09.1999 Bulletin 1999/37**

(73) Proprietor: **Koninklijke Philips Electronics N.V.
5621 BA Eindhoven (NL)**

(72) Inventor: **MOULSLEY, Timothy, James
NL-5656 AA Eindhoven (NL)**

(74) Representative: **Scott, Kevin James et al
Philips Corporate Intellectual Property
Cross Oak Lane
Redhill, Surrey RH1 5HA (GB)**

(56) References cited:
EP-A- 0 722 227          WO-A1-96/21293
GB-A- 2 291 570          US-A- 3 909 721
US-A- 5 283 780

• TAKAHASHI H.: 'ANTENNA AND MULTI
CARRIER COMBINED DIVERSITY SYSTEM'
IEICE TRANSACTIONS ON COMMUNICATIONS,
INSITUTE OF ELECTRONICS INFORMATIONS
AND COMM. ENG. vol. E79B, no. 9, 01 September
1996, TOKIO, pages 1221 - 1226
• CIMINI L.: 'clustered OFDM with transmitter
diversity and coding' GLOBAL
TELECOMMUICATION CONFERENCE vol. 1, 18
November 1996 - 22 November 1996, LONDON,
pages 703 - 707

**Description**

Technical Field

The present invention relates to radio communication systems employing multicarrier modulation techniques. Such systems may carry audio or data channels, or a combination of the two.

Background Art

MultiCarrier Modulation (MCM), also known as Orthogonal Frequency Division Multiplexing (OFDM) or Discrete Multitone Modulation (DMT), is a technique by which data is transmitted at a high rate by modulating several low bit rate carriers in parallel, rather than one high bit rate carrier. MCM is spectrally efficient, and has been shown to be effective for high performance digital radio links. Possible application areas include Digital Audio Broadcasting (DAB) (for high quality audio signals), Wireless Asynchronous Transfer Mode (WATM), for high speed, short distance radio links between computer systems) and future mobile radio systems such as Universal Mobile Telecommunication System (UMTS).

A major problem with transmitting at high data rates is multipath propagation, where signals arrive at a receiver via different transmission routes. This can cause fading (where the signals destructively interfere) or inter-symbol interference (where one signal is delayed relative to another). MCM can overcome many of the problems caused by multipath propagation by its inherently greater robustness to noise and delay.

However, even with use of MCM some problems remain. A deep fade may affect one or more of the carriers for long enough to lose some data and so to maintain data integrity redundancy can be introduced into the system. One means for doing this is known as diversity, with four basic forms:

1. space diversity - using two or more antennas, with the intention of reducing the chance of a fade affecting them all simultaneously;
2. time diversity - transmitting one or more additional copies of the data with a time delay between the copies, with the intention of reducing the chance of a time-varying fade affecting them all;
3. frequency diversity - transmitting on two or more frequencies, with the intention of reducing the chances of a fade affecting all frequencies simultaneously; and
4. coding diversity - adding an error correction code to the data. Although only one copy of the encoded data is transmitted, enough extra information has been encoded to cope with temporary loss of data.

In "Clustered OFDM with Transmitter Diversity and Coding", Cimini, L. et al, Communications: The Key To Global Prosperity, Globecom 1996, IEEE, vol. 1, pages 703-707, London, Nov. 18-22, 1996, a multicarrier system is disclosed in which sub-channels are clustered into several smaller blocks and transmitted over separate antennas.

In "Antenna and Multi-Carrier Combined Diversity System", Takahashi, H. & Nakagawa, M., IEICE Transactions on Communications, Tokyo, JP, vol. E79-B, No. 9, pages 1221-1226, September 1996, a diversity scheme is disclosed using multiple antennas in which antennas may be selected independently for the transmission of each carrier of a multicarrier signal. The antenna selection is based on the quality of signals received on each antenna.

US Patent Specification 5,283,780 describes an extension of coding diversity and is concerned with transmission of a number of audio channels in parallel. Each channel has error correction coding added, and is then regularly switched from one carrier to the next, so that any frequency selective fade only affects a small part of the transmitted data for each channel.

WO 96/21293 discloses the use of a dynamic interleaver in an OFDM system.

Both direct repetition of data and the addition of error coding have the disadvantage of increasing the bandwidth required to transmit the data.

Disclosure of Invention

An object of the present invention is to improve the performance of multicarrier systems.

According to one aspect of the present invention there is provided a method of transmitting data comprising:

converting a bit stream into symbols;
modulating the symbols onto a plurality of carriers of different frequencies; and
transmitting the plurality of carriers;

characterised by:

generating one or more copies of at least some of the symbols;
reordering the symbols including the copies by applying an interleaving algorithm; and
varying the interleaving algorithm such that the separation in the frequency domain of the symbols and their respective copies varies with time.

According to a second aspect of the present invention there is provided a transmitter comprising:

conversion means for converting an input bit stream into symbols modulation means for modulating the symbols onto a plurality of carriers of different frequencies; and
transmission means for transmitting the plurality of carriers;

characterised by:

repetition means for generating one or more copies of least some of the symbols;
interleaving means for reordering the symbols including the copies by applying an interleaving algorithm; and
control means for varying the interleaving algorithm such that the separation in the frequency domain of the symbols and their respective copies varies with time.

According to a third aspect of the present invention there is provided a receiver comprising
reception means for receiving a plurality of carriers at different frequencies modulated with symbols;
demodulation means for extracting the symbols from the received carriers;
conversion means for converting the extracted symbols into a bit stream;
characterised by
de-interleaving means for reordering the extracted symbols according to a de-interleaving algorithm;
combining means for generating one output symbol by combining one or more transmitted versions of at least some of the de-interleaved symbols; and
control means for varying the de-interleaving algorithm such that symbols and their respective copies which are separated in the frequency domain by a varying amount are combined by the combining means.
The present invention is based upon the recognition that a system implementing variable diversity is desirable.
By means of the present invention a radio communication system using multicarrier modulation can have diversity applied variably to the component parts of the data to be transmitted, for example depending on the importance of the information being transmitted and the state of the radio channel

Brief Description of Drawings

The present invention will now be described, by way of example, with reference to the accompanying drawings, wherein:

Figure 1 is a block schematic diagram of a system in accordance with the present invention;
Figure 2 is a block schematic diagram of an embodiment of a transmitter made in accordance with the present invention;
Figure 3 is a block schematic diagram of an embodiment of a receiver made in accordance with the present invention;

Modes for Carrying out the Invention

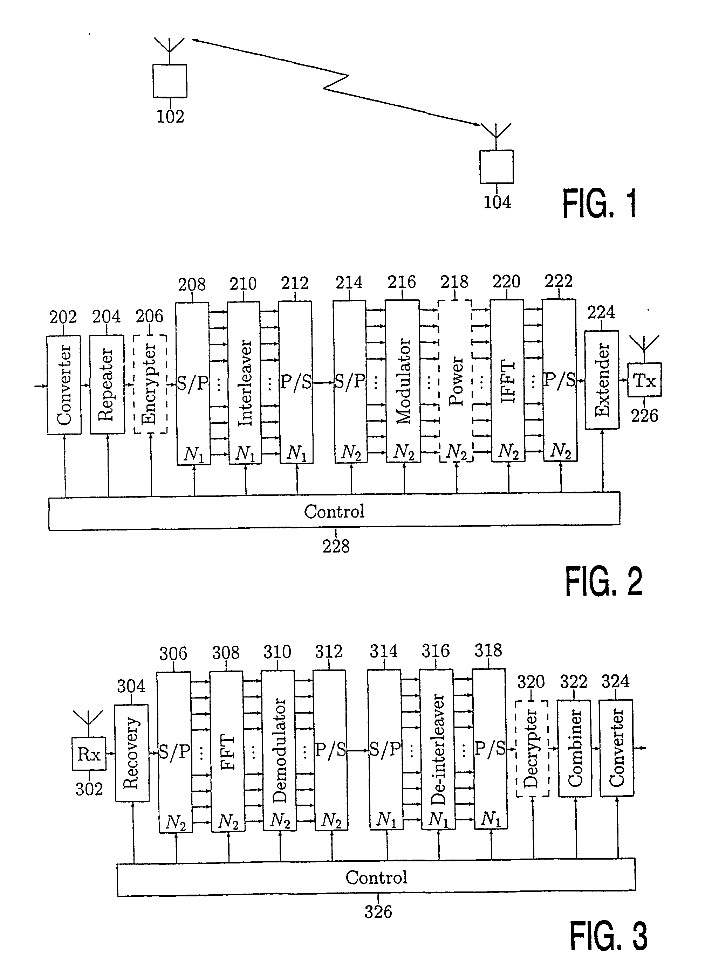

The system shown in Figure 1 comprises two stations 102, 104, each containing a transceiver, with a two-way radio communication link between them.
The transmitter shown in Figure 2 processes an input bitstream and broadcasts it using a MCM technique. The input bitstream comprises the data to be transmitted, and may optionally have had an error correction code applied to it for enhanced robustness. This bitstream is first presented to a converter 202, which generates the required stream of input symbols for further processing. A control block 228 ensures that the input symbols generated are appropriate to the modulation scheme being used for transmission, for example 2 bit symbols if Quadrature Phase Shift Keying (QPSK) is to be used. The control block may also add information to the data stream detailing how diversity has been applied.
A symbol repeater 204 takes this stream of input symbols and outputs each symbol one or more times, under instruction from the control block 228 (thus giving the possibility of different amounts of diversity for different parts of the data stream). If required, for security reasons, the stream of input symbols may be encrypted by an optional encryption block 206 which, if present, operates under instruction from the control block 228.

A multiplexer 208 takes as an input a serial stream of $N_1$ symbols and outputs each symbol onto one of its $N_1$ parallel output lines. The control block 228 may alter the block size so that the stream comprises fewer than $N_1$ symbols so that fewer output lines are required. An interleaver 210, under instruction from the control block 228, reorders the symbols and applies them to its output data lines. These output symbols are then recombined into a serial stream by a demultiplexer 212.

Next a multiplexer 214 takes as an input a serial stream of $N_2$ symbols and outputs each symbol onto one of its $N_2$ parallel output lines. The control block 228 may alter the block size so that the stream comprises fewer than $N_2$ symbols so that fewer output lines are required. Note that if $N_1=N_2$ the demultiplexer 212 and multiplexer 214 may both be omitted.

The symbols on each of the output data lines from the multiplexer 214 (or the interleaver 210 if $N_1=N_2$) are then modulated by a modulator 216, where the method of modulation (e.g. QPSK) is controlled by the control block 228 which ensures it is appropriate for the symbols generated by the converter 202. If required, for example in a system serving multiple users at different distances from the transmitter, the power level that will be used to transmit each symbol can be adjusted by an optional power controller block 218. The modulated data is then inverse fast Fourier-transformed by an IFFT block 220 before being recombined into a serial data stream by a demultiplexer 222.

Before the data stream is suitable for transmission, cyclic extension (also known as a guard interval) is added and pulse shaping is performed by a symbol extender block 224, with the aim of avoiding inter-symbol interference. The techniques used by the symbol extender block 224 are well known, as described for example in "Principles of Modulation and Channel Coding for Digital Broadcasting for Mobile Receivers" M. Alard and R. Lassalle, EBU Review - Technical, August 1987, pp.168-190.

Finally, the signal is passed on to radio broadcast means 226.

A basic task of the control block 228 is to identify the component parts of the input data stream, for example destination information and other control information. This information, together with any information gained about the quality of the transmission channel, enables it to determine the degree of diversity that should be applied to the component parts of the data stream, and to schedule the transmission of data in appropriate time and frequency slots using an appropriate modulation scheme.

The control block 228 has available up to three adjustable dimensions which can be used to alter the behaviour of the system:

1. The number of bits in an input symbol, m. A symbol encoding m bits has $2^m$ states.
2. The data block size, $n_1$. This can be no larger than $N_1$, the number of parallel output lines of the multiplexer 208.
3. The MCM symbol size, $n_2$, which is also equal to the number of carriers transmitted. This can be no larger than $N_2$, the number of parallel output lines of the multiplexer 214.

The choice of modulation scheme for the modulator 216 determines the required size of the input symbol m.

In most applications, the data block size $n_1$ will be an integer multiple of the MCM symbol size $n_2$. If $n_1= k\, n_2$, one data block is transmitted over k MCM transmission periods. Hence, having k>1 makes time diversity available to the control block, since symbols that are separated by more than $n_2$ in the output from the demultiplexer 212 will be transmitted at different times. This is implemented by controlling the algorithm used by the interleaver 210.

Data supplied to different input lines of the IFFT block 220 appears modulated on a different carrier frequency on transmission (as described for example in "Multicarrier Modulation for Data Transmission: An Idea Whose Time Has Come", J. A. C. Bingham, IEEE Communications Magazine, May 1990, pp.5-14). Hence, the control block can implement frequency diversity by controlling the algorithm used by the interleaver 210 so that copies of data generated by the repeater 204 appear on different input lines to the IFFT block.

The receiver shown in Figure 3 receives a broadcast MCM signal and processes it to regenerate the bitstream provided as input to the transmitter. A radio reception means 302 generates a complex time domain waveform, from which the cyclic extension added by the transmitter is removed by a symbol recovery block 304. The waveform is then supplied as input to a multiplexer 306 which takes a portion of the waveform corresponding to the time taken to transmit one MCM symbol and splits it into $N_2$ samples, each of which is applied to one of its $N_2$ parallel output lines. A control block 326 can alter the block size so that the waveform is split into fewer than $N_2$ samples to correspond to the number of carriers actually transmitted.

The samples are then applied to a FFT block 308 to be fast Fourier-transformed, generating modulated data on each of its output lines. The data is demodulated by a symbol demodulator block 310 in which the method of demodulation is controlled by the control block 326 to correspond to that used in transmission. The output symbols (which may, of course, be corrupted by transmission errors) are then recombined into a serial stream by a demultiplexer 312.

A multiplexer 314 takes as input a stream of $N_1$ symbols and outputs each symbol onto one of its $N_1$ parallel

output lines. The control block 326 can alter the block size to correspond to the data block size used for transmission. The output symbols are supplied to a de-interleaver 316 which reorders them and applies them to its output lines, under instruction from the control block 326 which uses the same algorithm as on transmission. The resultant set of symbols is recombined into a serial stream by a demultiplexer 318.

As with the transmitter, if $N_1=N_2$ the demultiplexer 312 and multiplexer 314 may both be omitted and the output from the demodulator 310 used directly as input to the de-interleaver 316.

If encryption was used on transmission, the serial symbol stream is processed by a decryption block 320.

Multiple copies of symbols that were generated and transmitted, using either frequency or time diversity, are now adjacent to one another in the serial symbol stream applied as input to a combiner 322. This block can use a variety of techniques to decide on the correct value for the symbol. As an example for Differential Phase Shift Keying (DPSK) with n copies of the data transmitted at the same time on different carriers, the combined complex symbol can be determined from

$$d(t) = Re \left[ \sum_{i=1}^{n} g_i^2 x_i(t) x_i^*(t-1) \right] \qquad (1)$$

where Re(x) provides the real part of x, $x_i(t)$ is the received phasor from channel i at time t, $x_i^*(t-1)$ is the complex conjugate of the received phasor from the previous symbol and $g_i^2$ is a scaling factor chosen to optimise the decision. The received data is then determined by comparison of the phase of d(t) with one or more thresholds.

Finally, a converter 324 regenerates the required output bitstream from the stream of symbols passed to it, with the control block 326 ensuring that the conversion is appropriate for the symbols used.

To give further insight into the practical operation of a MCM system made in accordance with the invention, two examples will now be described.

The first example is for a high bit rate indoor communication system, such as WATM. It is assumed that the channel is stationary or slowly changing and that the input data is protected by channel coding, with codewords long enough to take advantage of the interleaving depth. Time diversity is unlikely to be effective. Parameters for this system are:

Number of carriers $N_2$= 16
Cyclic extension 2 samples
Effective sampling rate at transmitter = 20MHz
OFDM Symbol duration = 0.9 $\mu$ s
Modulation DQPSK, converter combines 2 bits into one symbol
Gross bit rate 2 x 16/0.9e-6 = 35.56Mbps

Consider three modes of operation. The appropriate mode is determined by examining the signal level and data quality for each carrier. The necessary signalling can be carried out (using a well protected channel) to establish the optimum mode of operation.

1. Under good conditions, with no significant multipath fading, no diversity is required. Data is transmitted at the gross bit rate (as modified by channel coding). Interleaving has no benefit so set $N_1= N_2$ . Blocks 210, 212 and 214 are not needed, and so could by bypassed to save processing power.

2. Under bad conditions frequency diversity is applied (to all data in this example). In this case all symbols are repeated once. Again set $N_1= N_2$ . A fixed block interleaving is applied to separate the repeated symbols by $N_1$/2. In fact, no other re-arrangernent of the symbol ordering is required. The transmission rate is reduced by a factor of two compared with the first mode of operation

The order of interleaved symbols could be $1,3,5,...,N_1-1,2,4,6,...,N_1$.

3. Under some conditions a fixed diversity separation will not be effective. An example of such a condition is where the channel transfer function in the frequency domain is periodic with a period equal to (or a multiple of) the diversity separation. This condition could occur, for example, where the channel contains two dominant propagation paths which happen to have a delay difference equal to the reciprocal of the diversity spacing (or a multiple of the reciprocal). In this case $N_1$ may be increased, for example to $N_1= 8$ $N_2$. The interleaver 210 can be configured such that the diversity separations between the repeated symbols are unequal, and change between each of the OFDM symbols. The transmission rate is the same as that for the second mode of operation. The order of the first block

of $N_2$ interleaved symbols could be as in the second mode of operation. If a cyclic shift is applied to part of the data the order of the second block could be: 1,3,5,7,9,11,13,15,6,8,10,12,14,16,2,4

The second example is for a mobile radio system. Here the channel may change rapidly, so that time diversity may be effective.

Consider first the downlink used for speech communication. The input data to the system consists of coded speech from different users multiplexed into a single data stream. As an example, assume that for each speech frame errors in some of the bits are less significant from the point of view of speech quality (for example the GSM full rate codec has this property). Channel coding is only applied to the most important bits.

Parameters of the speech codec are:

Bit rate = 8kbps
Fraction of important bits = 0.5
Code rate applied to important bits = 2/3
Bit rate of (coded) important bits = 6kbps
Bit rate of (uncoded) unimportant bits = 4kbps

Parameters of the transmission system are:

Number of carriers $N_2$= 512
Cyclic extension 100 samples
Effective sampling rate at transmitter = 20MHz
OFDM symbol duration = 30.6 $\mu$ s
Modulation DQPSK, converter combines 2 bits into one symbol
Gross bit rate 2 x 512/30.6e-6 = 33.46Mbps

This system could, in theory, support about 3300 voice channels. In this example the repeater 204 repeats once only the symbols containing coded important bits.

Consider first the downlink. Both time and frequency diversity could be applied to achieve resistance to multipath fading for moving terminals. Here both are considered. In this case $N_1$> $N_2$ , for example $N_1$= $8N_2$, and the interleaver 210 is configured such that the repeated bits are separated in time and frequency. In this example a 128x32 block interleaver would be suitable, except that the time and frequency domain spacing of the data would be uniform. Non uniform spacing can be achieved by cyclic shifting of parts of rows and columns within the 128x32 element matrix.

Now consider the uplink. Here the total bit rate will be much lower (i.e. speech from one user). For this and for various other practical reasons (such as reducing power consumption) it may be desirable to transmit using a limited number of adjacent carriers. The input stream may be padded with null data (at least conceptually), in which case the outputs from the modulator 216 will be zero, except for the desired carriers. The interleaver 210 would then be configured to produce a small number of symbol blocks (e.g. 2), separated in frequency by a defined spacing. The repeated symbols are placed in different blocks to achieve frequency diversity.

As an example, the speech codec might deliver data in 20ms frames of 100 symbols (200 bits including channel coding). After repetition of the important symbols this would become 160 symbols, which could be transmitted in two groups of 80 symbols. The location of these groups of symbols in the frequency domain could change for successive frames.

From reading the present disclosure, other modifications will be apparent to persons skilled in the art. Such modifications may involve other features which are already known in the design, manufacture and use of radio communication systems and component parts thereof which may be used instead of or in addition to features already described herein.

Industrial Applicability

The present invention has a wide range of industrial applicability, including digital audio broadcasting, wireless ATM and future mobile radio systems.

**Claims**

**1.** A method of transmitting data comprising:

converting a bit stream into symbols;
modulating the symbols onto a plurality of carriers of different frequencies; and
transmitting the plurality of carriers;

**characterised by**:

generating one or more copies of at least some of the symbols;
reordering the symbols including the copies by applying an interleaving algorithm; and
varying the interleaving algorithm such that the separation in the frequency domain of the symbols and their respective copies varies with time.

2. A method as claimed in claim 1, further comprising varying the interleaving algorithm such that the separation in the time domain of the symbols and their respective copies varies with time.

3. A method as claimed in claim 1 or 2, further comprising varying the number of data bits per symbols such that the number of carriers transmitted varies with time.

4. A transmitter comprising:

conversion means (202) for converting an input bit stream into symbols modulation means (216) for modulating the symbols onto a plurality of carriers of different frequencies; and
transmission means (226) for transmitting the plurality of carriers;

**characterised by**:

repetition means (204) for generating one or more copies of least some of the symbols;
interleaving means (210) for reordering the symbols including the copies by applying an interleaving algorithm; and
control means (228) for varying the interleaving algorithm such that the separation in the frequency domain of the symbols and their respective copies varies with time.

5. A transmitter as claimed in claim 4, comprising means (228) for varying the interleaving algorithm such that the separation in the time domain of the symbols and their respective copies varies with time.

6. A transmitter as claimed in claim 4 or 5, comprising means (228) for varying the number of data bits per symbols such that the number of carriers transmitted varies with time.

7. A receiver comprising
reception means (302) for receiving a plurality of carriers at different frequencies modulated with symbols;
demodulation means (310) for extracting the symbols from the received carriers;
conversion means (324) for converting the extracted symbols into a bit stream;
**characterised by**
de-interleaving means (316) for reordering the extracted symbols according to a de-interleaving algorithm;
combining means (322) for generating one output symbol by combining one or more transmitted versions of at least some of the de-interleaved symbols; and
control means (326) for varying the de-interleaving algorithm such that symbols and their respective copies which are separated in the frequency domain by a varying amount are combined by the combining means.

8. A receiver as claimed in claim 7, comprising means (326) for varying the de-interleaving algorithm such that symbols and their respective copies which are separated in the time domain by a varying amount are combined by the combining means (322).

**Patentansprüche**

1. Verfahren zum Übertragen von Daten, wobei dieses Verfahren die nachfolgenden Verfahrensschritte umfasst:

- das Umwandeln eines Bitstroms in Symbole,

- das Modulieren der Symbole auf einer Anzahl Träger verschiedener Frequenzen; und
- das Übertragen der Anzahl Träger;

**gekennzeichnet durch**

- Erzeugung von einem oder mehreren Kopien wenigstens einiger Symbole;
- Aufzeichnung der Symbole einschließlich der Kopien **durch** Anwendung eines verschachtelnden Algorithmus; und
- Variation des verschachtelnden Algorithmus, so dass die Trennung in der Frequenzdomäne der Symbole und deren Kopien mit der Zeit variiert.

2. Verfahren nach Anspruch 1, wobei weiterhin der verschachtelnde Algorithmus derart variiert wird, dass die Trennung in der Zeitdomäne der Symbole und deren betreffenden Kopien mit der Zeit variiert.

3. Verfahren nach Anspruch 1 oder 2, wobei weiterhin die Anzahl Datenbits je Symbole derart variiert wird, dass die Anzahl übertragener Träger mit der Zeit variiert.

4. Sender, der die nachfolgenden Elemente umfasst:

- Umwandlungsmittel (202) zum Umwandeln eines Eingangsbitstroms in Symbole,
- Modulationsmittel (216) zum Modulieren der Symbole auf einer Anzahl Träger verschiedener Frequenzen; und
- Übertragungsmittel (226) zum Übertragen der Anzahl Träger; **gekennzeichnet durch**:

- Wiederholungsmittel (204) zum Erzeugen einer oder mehrerer Kopien wenigstens einiger Symbole;
- Verschachtelungsmittel (210) zum Neuordnen der Symbole einschließlich der Kopien **durch** Anwendung eines verschachtelnden Algorithmus; und
- Steuermittel (228) zum Variieren des verschachtelnden Algorithmus, so dass die Trennung in der Frequenzdomäne der Symbole und deren betreffenden Kopien mit der Zeit variiert.

5. Sender nach Anspruch 4, mit Mitteln (228) zum Variieren des verschachtelnden Algorithmus, so dass die Trennung in der Zeitdomäne der Symbole und deren betreffenden Kopien mit der Zeit variiert.

6. Sender nach Anspruch 4 oder 5, mit Mitteln (228) zum Variieren der Anzahl Datenbits je Symbole, so dass die Anzahl übertragener Träger mit der Zeit variiert.

7. Empfänger, der die nachfolgenden Elemente umfasst:

- Empfangsmittel (302) zum Empfangen einer Anzahl Träger mit verschiedenen Frequenzen, moduliert mit Symbolen,
- Demodulationsmittel (310) zum Extrahieren der Symbole aus den empfangenen Trägern;
- Umwandlungsmittel (324) zum Umwandeln der extrahierten Symbole in einen Bitstrom;

**gekennzeichnet durch**

- Entschachtelungsmittel (316) zum Neuordnen der extrahierten Symbole entsprechend einem Entschachtelungsalgorithmus;
- Kombiniermittel (322) zum Erzeugen eines Ausgangssymbols **durch** Kombination einer oder mehrerer übertragener Versionen wenigstens eines der entschachtelten Symbole; und
- Steuermittel (326) zum Variieren des Enschachtelungsalgorithmus, so dass Symbole und deren betreffende Kopien, die in der Frequenzdomäne **durch** einen variierenden Betrag getrennt werden, **durch** die Kombiniermittel kombiniert werden.

8. Empfänger nach Anspruch 7, mit Mitteln (326) zum variieren des Entschachtelungsalgorithmus, so dass Symbole und deren betreffende Kopien, die in der Zeitdomäne durch einen variierenden Betrag getrennt sind, durch die Kombiniermittel (322) kombiniert werden.

**Revendications**

1. Procédé de transmission de données comprenant :

la conversion d'un train de bits en symboles ;
la modulation des symboles sur une pluralité de porteuses de fréquences différentes ; et
la transmission de la pluralité de porteuses ;

**caractérisé par** :

la génération d'une ou plusieurs copies d'au moins certains des symboles ;
la réorganisation des symboles, y compris des copies, en appliquant un algorithme d'entrelacement ; et
le fait de faire varier l'algorithme d'entrelacement d'une manière telle que la séparation dans le domaine fréquentiel des symboles et de leurs copies respectives varie dans le temps.

2. Procédé selon la revendication 1, comprenant en outre le fait de faire varier l'algorithme d'entrelacement d'une manière telle que la séparation dans le domaine temporel des symboles et de leurs copies respectives varie dans le temps.

3. Procédé selon la revendication 1 ou 2, comprenant en outre le fait de faire varier le nombre de bits de données par symbole d'une manière telle que le nombre de porteuses transmises varie dans le temps.

4. Emetteur comprenant :

des moyens de conversion (202) pour convertir un train de bits d'entrée en symboles ;
des moyens de modulation (216) pour moduler les symboles sur une pluralité de porteuses de fréquences différentes ; et
des moyens de transmission (226) pour transmettre la pluralité de porteuses ;

**caractérisé par** :

des moyens de répétition (204) pour générer une ou plusieurs copies d'au moins certains des symboles ;
des moyens d'entrelacement (210) pour réorganiser les symboles, y compris les copies, en appliquant un algorithme d'entrelacement ; et
des moyens de commande (228) pour faire varier l'algorithme d'entrelacement d'une manière telle que la séparation dans le domaine fréquentiel des symboles et de leurs copies respectives varie dans le temps.

5. Emetteur selon la revendication 4, comprenant des moyens (228) pour faire varier l'algorithme d'entrelacement d'une manière telle que la séparation dans le domaine temporel des symboles et de leurs copies respectives varie dans le temps.

6. Emetteur selon la revendication 4 ou 5, comprenant des moyens (228) pour faire varier le nombre de bits de données par symbole d'une manière telle que le nombre de porteuses transmises varie dans le temps.

7. Récepteur comprenant :

des moyens de réception (302) pour recevoir une pluralité de porteuses à des fréquences différentes modulées avec des symboles ;
des moyens de démodulation (310) pour extraire les symboles à partir des porteuses reçues ;
des moyens de conversion (324) pour convertir les symboles extraits en un train de bits ;

**caractérisé par** :

des moyens de désentrelacement (316) pour réorganiser les symboles extraits selon un algorithme de désentrelacement ;
des moyens de combinaison (322) pour générer un symbole de sortie en combinant une ou plusieurs versions transmises d'au moins certains des symboles désentrelacés ; et
des moyens de commande (326) pour faire varier l'algorithme de désentrelacement d'une manière telle que les symboles et leurs copies respectives qui sont séparés dans le domaine fréquentiel d'une quantité qui varie sont combinés par les moyens de combinaison.

8. Récepteur selon la revendication 7, comprenant des moyens (326) pour faire varier l'algorithme de désentrelacement d'une manière telle que les symboles et leurs copies respectives qui sont séparés dans le domaine fréquentiel d'une quantité qui varie sont combinés par les moyens de combinaison (322).

FIG. 1

FIG. 2

FIG. 3